# Europäisches Patentamt
## European Patent Office
## Office européen des brevets

(11) Publication number: **0 197 930**
**B1**

(12) **EUROPEAN PATENT SPECIFICATION**

(45) Date of publication of patent specification: **27.01.88**

(51) Int. Cl.⁴: **G 06 F 13/14, H 04 L 11/00**

(21) Application number: **84904186.8**

(22) Date of filing: **23.10.84**

(86) International application number:
**PCT/SE84/00350**

(87) International publication number:
**WO 86/02751 09.05.86 Gazette 86/10**

(54) **ARRANGEMENT FOR PATH SELECTION IN A COMMUNICATIONS NETWORK.**

(43) Date of publication of application:
**22.10.86 Bulletin 86/43**

(45) Publication of the grant of the patent:
**27.01.88 Bulletin 88/04**

(84) Designated Contracting States:
**DE FR GB**

(56) References cited:
**SE-B-77 083 541**
**US-A-4 099 235**

(73) Proprietor: **Televerket**
**Televerkets Huvudkontor Fack**
**S-123 86 Farsta (SE)**

(72) Inventor: **KATZEFF, Kurt**
**Televerkets Huvudkontor**
**Fack S-123 86 Farsta (SE)**

(74) Representative: **Karlsson, Berne**
**Televerkets Huvudkontor Patent Department**
**Fack**
**S-123 86 Farsta (SE)**

Courier Press, Leamington Spa, England.

## Description

Arrangement for path selection in a communications network

The present invention relates to an arrangement in a communications network, for example an integrated network for data, telephony, text and/or images. The arrangement comprises terminals and computers connected and/or capable of being connected to the network, said computers being able to perform a variety of operating tasks. Each terminal is capable of being linked to a desired or random computer which will perform the operating task notified from the terminal on activation.

Description of the prior art

The underlying concept for the use of the aforementioned terminals and computers, that is to say host computers or host processors, in connection with the aforementioned network is that each terminal shall be capable of being activated for the purpose of linking it to the one computer or to any of the computers which is able to execute the operating task which it is wished to have carried out from the terminal, on activation, and that the computers in the network which perform the operating tasks shall be utilized in the most effective manner possible and without unnecessarily lengthy waiting times for each terminal.

One possible means by which the above problem may be solved is to design the terminals in such a way that each terminal is capable largely of its own accord of determining and controlling the path via which a link with an unoccupied host computer can be established.

Description of the present invention

Technical problem

The solution envisaged does, however, involve the use of technically complicated terminals which, for that reason, must be designed as complete computers having, for example, their own software for the internal processing of information received from and transmitted to the network.

The wish exists to be able to use terminals of simple design for communication with the network and the host computers, for example terminals of the teletype kind with a recorder and a screen/print-out facility, etc. The possibility of also connecting complicated terminals to the network, if so desired, shall also be provided.

Solution

The principal object of the present invention is to propose an arrangement which will solve, amongst other things, the problem outlined above. What may primarily be regarded as being characteristic of the novel arrangement is that each terminal is so arranged, when activated, as to cause linking with a piece of path selection equipment and transmission to it of a definition of the type of work it is wished to have performed from the terminal. Depending on the nature of the aforementioned definition, the path selection equipment will transmit back to the terminal information relating to the traffic route to be allocated in the network to the terminal enabling it to be linked to a computer which is capable of performing the task. Once the terminal has received the aforementioned information in respect of the selected path, the connection between the terminal and the path selection equipment will be interrupted, allowing the terminal to utilize the information transmitted from the path selection equipment in order to effect a link of its own with the most suitable computer available at that particular time, which must, of course, be capable of performing the desired task.

In further developments of the idea of invention it is proposed that the terminal shall be so arranged that, in the event of the aforementioned activation, it will cause automatic linking to take place with the path selection equipment. Interruption of the connection to the path selection equipment once the information in respect of the selected path has been transmitted to the terminal should preferably be performed from the terminal.

The network may incorporate one or more pieces of path selection equipment which for this purpose can be positioned, for example, at the outlets of an outgoing selector. It is also possible to arrange a piece of path selection equipment in one or more of the aforementioned host computers, for example in a computer with which each terminal usually operates. Each piece of path selection equipment is capable in one embodiment of being called up from a host computer, for example when the terminal is required to switch to another type of operating task, in conjunction with the rearrangement of connections of high or low priority, etc.

Each piece of path selection equipment should preferably be capable of being controlled by means of one or more monitoring organs arranged in the network and which control the path directing function of each piece of path selection equipment. In the event of it not being possible to establish communication paths from the terminal, for example because of over-loading in the network, the terminal will receive information to this effect from the path selection equipment.

The invention also incorporates further exchanges of information between a terminal and the path selection equipment/computers. Each terminal may, for example, receive notification indicating whether it is capable of acting as a receiving element in a given operating task.

The object of the invention will also function in networks which represent the integration of two or more networks with different network architectures. In this case the network will contain pieces of path selection equipment which can serve each network architecture. It will also be possible in this instance to make use of conversion equipment enabling terminals for a first network architecture to be utilized for communication with the computers of a second network architecture and of a third network architecture, and so on.

The direction of traffic paths within the network by the pieces of path selection equipment should preferably be capable of being determined on the basis of traffic measurements performed by the computers and/or the conversion equipment of the network. The computers and/or the pieces of conversion equipment influence the pieces of path selection equipment via central monitoring devices in the network.

## Advantages

The invention permits the use of terminals of simple design at the same time as the network function in its entirety can be used in an optimal fashion. The one or more pieces of path selection equipment can continue to be supplied with information in respect of the load on the network and on the host computers and in respect of actual needs, etc. The facility for the allocation of priority to connections can be provided, and both simple and complicated terminals can be connected to the network, etc. The invention may be applied with advantage to integrated networks which are able to serve equipment designed for mutually different network architectures, in which case the use is also proposed of a component-saving arrangement for the pieces of conversion equipment which are used for communication between different types of equipment.

## Description of the drawings

A preferred embodiment of an arrangement which exhibits the significant characteristic features of the invention is described below with reference to the accompanying drawings, in which:

Figure 1 shows in the form of a block diagram the basic design of a communications network having, amongst other things, terminals, processors and path selection equipment; and

Figure 2 shows in the form of a block diagram the basic design of the central monitoring organs in the network in accordance with Figure 1.

## Description of the preferred embodiment

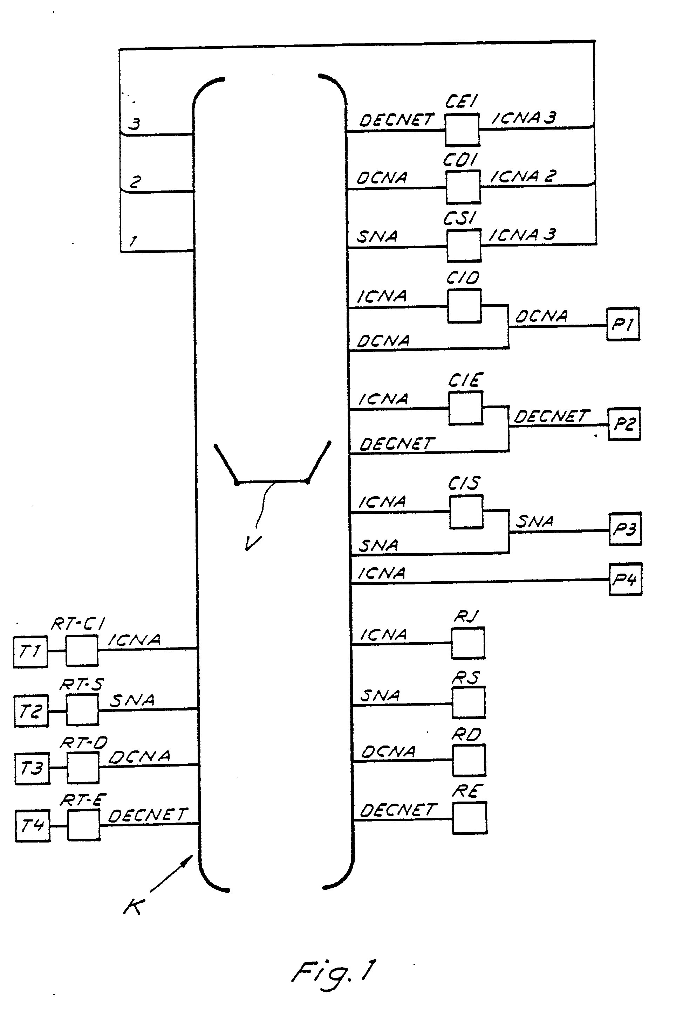

A communications network, for example an integrated network for data, telephony, text and/or images, is indicated by K in Figure 1. The design of the network may be of a previously disclosed type and will accordingly not be described here in detail, but is shown only in principle by means of a selector symbol V and inputs and outputs in the network.

A number of terminals T1, T2, T3, T4 are connected to the network via storage devices RT—CI, RT—S, RT—D and RT—E for the purpose of determining the path selection in the network. To the network are also connected host computers or processors P1, P2, P3 and P4, these designations being able to represent not only the processors but also mail boxes, text conference equipment, and connection equipment to other networks, etc. The aforementioned pieces of equipment can also include multiplexers and concentrators. Each of the terminals T1—T4 shall be capable of being linked to the aforementioned pieces of equipment P1—P4 for the purpose of performing different operating tasks. The host computers are able in this respect to perform different operating tasks. Two or more computers can, of course, perform the same operating task, should the need for the operating task in question to be performed exist within the network. Each of the terminals is thus capable of being connected to one or more computers via the network.

In accordance with the invention, the design illustrated includes pieces of specific path selection equipment RI, RS, RD and RE, to which the terminals are automatically linked via the network when they are activated. The pieces of path selection equipment are connected to outlets in the selection network in accordance with Figure 1, but may, as an alternative or in addition, be arranged inside or adjacent to one or more of the pieces of equipment P1—P4. The latter case will be of interest, for example, when a terminal is used almost exclusively with a single processor, which is provided in this way with a piece of path selection equipment of this kind.

In the embodiment shown, use is made of a network which provides the integration of networks with a number, being in the case illustrated three, of different network architectures. Terminals, processors and path selection equipment are provided in this case for each of the network architectures, and also for the integrated network as such.

The terminal T1, the storage device RT—CI for path selection information, the path selection equipment RI and the processor P4 are matched to the overall integrated network architecture, referred to here as ICNA, which is the preferred designation for the Integrated Communications Network Architecture used by the Swedish Telecommunications Administration. T2, RT—S, RS and P3 are matched to a network architecture in accordance with SNA (System Network Architecture), which constitutes a first network architecture developed for a company. T3, RT—D, RD and P1 are contained in the DCNA (Distributed Communication Network Architecture) network architecture, which constitutes a second network architecture developed for a company. T4, RT—E, RE and P2 are contained in the DECNET (Digital Equipment Computer Network) network architecture, which constitutes a third network architecture developed for a company.

**0 197 930**

In order to permit communication between terminals and processors of different network, the network design includes CIS conversion equipment, which is conversion equipment between ICNA and SNA. Similarly, CIE is conversion equipment between ICNA and DECNET, CID between ICNA and DCNA, CSI between SNA and ICNA (which can be the same as CIS), CEI between DECNET and ICNA (which can be the same as CIE), and CDI between DCNA and ICNA (which can be the same as CID).

The aforementioned architectures SNA, DCNA and DECNET represent at the present time the most common network architectures and trace routines. ICNA overlaps all three of the aforementioned architectures and presupposes the use of OSI, on condition that OSI has been defined.

When one terminal of the aforementioned terminals T1—T4 is occupied or is activated, it will be connected automatically to the path selection equipment RI, RS, RD or RE of the group or architecture to which it belongs. The operator initiates his work at the terminal by indicating the designation of the task which he wishes to perform. The path selection equipment translates the name of the task into path selection information which is transmitted back to the storage device of the terminal, that is to say to one of the piece of path selection equipment RT—CI, RT—S, RT—D or RT—E. The storage equipment for the terminal concerned controls the establishment of the connection to that processor which is able to perform the task.

Each piece of path selection equipment may conveniently also be so arranged as to provide automatic switching over from one computer which is already linked, to another computer. This may be of interest if the operating task at the terminal changes, and if it is wished to have performed another type of work which the computer concerned is unable to execute. Another reason for the aforementioned switching over is that the computer concerned may be required to perform a task of higher priority than that with which it is involved at the time.

In a preferred embodiment one or more terminals are executed in such a way that each terminal for each computer and/or each piece of path selection equipment is able to transmit a code which describes the characteristics and execution of the terminal, for example the key arrangement, graphics, capabilities, colour, and print-out capabilities, etc. The path selection equipment is able in a preferred embodiment to take into account the aforementioned terminal characteristics when selecting the computer. The path selection equipment notifies the terminal of any restrictions on the uses of the terminal for the desired task. The path selection equipment can also notify the terminals of the type of terminal which should be used if complete processing of the task is desired. The aforementioned information can also be provided by the computer if information relating to the type of terminal is transmitted further to the computer.

Different instances of trace routine conversion may occur in accordance with the above. If the terminal and the processor are matched to the same architecture and trace routine, no conversion equipment will be linked in. Conversion equipment will be required if either the processor or the terminal is matched to ICNA. If neither the terminal nor the processor is matched to ICNA, then two pieces of conversion equipment will require to be linked together via ICNA. The Table below shows the occasions when the different pieces of conversion equipment are required.

| Processor:<br>Terminal | INCA | SNA | DCNA | DECNET |
|---|---|---|---|---|
| ICNA | None | CIS | CID | CIE |
| SNA | CSI | None | CSI—CID | CSI—CIE |
| DCNA | CDI | CDI—CIS | None | CDI—CIE |
| DECNET | CEI | CEI—CIS | CEI—CID | None |

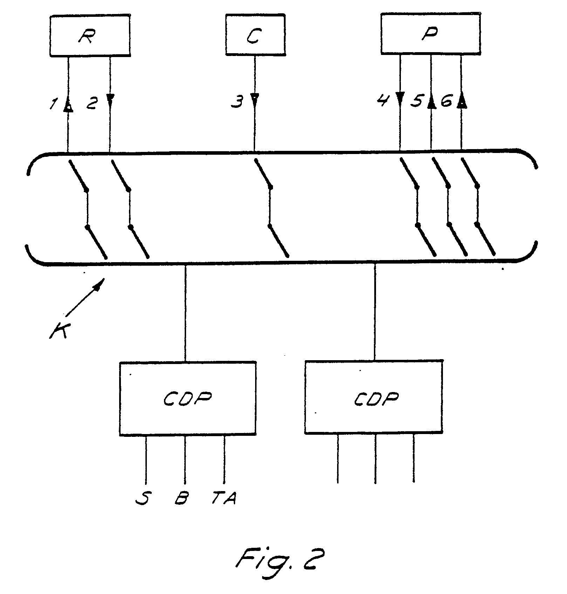

The concept for the equipment illustrated contains functions for the control, monitoring and administration of the network, which is shown clearly in Figure 2. The pieces of path selection equipment connected to the network K in Figure 1 are indicated in Figure 2 by the designation R. The pieces of conversion equipment and the processors in accordance with Figure 1 are included in a similar fashion in Figure 2 and are indicated respectively by the designations C and P. The central monitoring organs in the network are symbolized by CDP (Central Monitoring Processors). Control paths 1—6 are indicated by arrows. The arrow 1 indicates the possibility for changing the path selection information, the blocking of certain traffic and/or the allocation of priority to certain traffic via the pieces of equipment R. The arrow 2 indicates availability information and/or traffic statistics from the path selection equipment. The arrow 3 indicates availability information and/or traffic statistics from the conversion equipment, whereas the arrow 4 indicates corresponding information or statistics from the processors P. The processors can also be controlled so as to allocate priority to certain traffic, as indicated by the arrow 5. The interruption of certain connections, for example those with low priority, can also be controlled; see the arrow 6.

The central monitoring processors may be of a previously disclosed type and may include connections for a printer S, a screen B and a keyboard TA, etc.

4

Changes to traffic path information shall be capable of being made from appropriate central points in the network, cf. CDP, which will arrive at the pieces of path selection equipment R via separate selectors. The terminals and the operators must identify themselves to the path selection equipment R so that the latter can select a path of, if necessary, block traffic on the basis of its origin. Processors and pieces of conversion equipment shall meter their traffic continuously and shall notify blocking situations to the central monitoring points of the network, which in turn control the operation of the path selection equipment. The path selection equipment shall be able to communicate with the central monitoring points of the network and shall notify any communication requirements which cannot be executed. The possibility shall be afforded of interrupting connections of low priority via the processors from a central point in the network, should the information from the path selection equipment so require.

**Claims**

1. Communications arrangement comprising a communications network (K), for example an integrated network for data, telephony, text and/or images, and further comprising terminals (T1—T4) and computers (P1—P4) connected to the network, with each terminal being capable of being linked to the desired computer which performs the desired operating task entered via the terminal, characterized in that the terminal is so arranged, when activated, as to cause linking to occur with a piece of path selection equipment (RI, RS, RD, RE) and the transmission to the latter of a definition of the type of work that it is wished to have carried out from the terminal, in that the path selection equipment will, depending on the nature of the aforementioned definition, send back to the terminal information relating to the traffic route to be allocated in the network to the terminal when it is activated so that it can be connected to a computer which is capable of performing the task, and in that the connection between the terminal and the path selection equipment is interrupted once the terminal has received the aforementioned information, the terminal then being capable of effecting a link of its own to said computer.

2. Arrangement in accordance with Patent Claim 1, characterized in that the terminal (T1—T4) is so arranged, in the event of the aforementioned activation, as to cause automatic linking to occur with the path selection equipment and, once the aforementioned information has been received, to cause the automatic interruption of the connection to the path selection equipment.

3. Arrangement in accordance with Patent Claim 1, characterized in that one or more pieces of path selection equipment (RI, RS, RD, RE) are arranged in the selector system and/or that one or more pieces of path selector equipment are arranged in one or more computers, preferably in a computer or computers with which the terminal is mainly used.

4. Arrangement in accordance with any of the preceding Patent Claims, characterized in that each piece of path selection equipment is capable of being controlled by means of one or more monitoring organs (CDP) arranged in the network which control the path directing function of each piece of path selection equipment.

5. Arrangement in accordance with Patent Claim 4, characterized in that each piece of path selection equipment is so arranged as to notify a terminal which is being called up whenever a required communication cannot be executed by the activated terminal.

6. Arrangement in accordance with Patent Claims 4 or 5, characterized in that the path selection equipment is so arranged as to control the aforementioned monitoring organs so as to interrupt a connection with low priority.

7. Arrangement in accordance with any of the preceding Patent Claims, characterized in that each terminal incorporates or is connected to a storage device (RT—S, RT—D, RT—E, RT—CI) for path selection information.

8. Arrangement in accordance with any of the preceding Patent Claims, characterized in that each piece of path selection is so arranged as to be capable of being switched in such a way that automatic switching will take place from any already linked computer to another computer, for example when the linked computer is unable to execute a particular type of task and when the other computer is able to perform the task.

9. Arrangement in accordance with any of the preceding Patent Claims, characterized in that the terminal for the path selection equipment will transmit information, for example in coded form, which describes the characteristics of the terminal, in which case the path selection equipment will also take account of these characteristics when linking the terminal to a computer.

10. Arrangement in accordance with any of the preceding Patent Claims, characterized in that the path selection equipment or the computer for the terminal will transmit information relating to what is required of the terminal in order to cause the required tasks to be processed.

**Patentansprüche**

1. Fernmeldeanordnung umfassend ein Fernmeldenetz (K), z.B. ein integriertes Netz Für Daten, Telephonie, Text und/oder Bilder und ferner, umfassend an das Netz angeschlossene Terminale (T1—T4) und Computer (P1—P4), wobei das einzelne Terminal an den erwünschten Computer, der die vom Terminal erwünschten Aufgaben ausführt, angeschlossen werden kann, dadurch gekennzeichnet, dass das

**0 197 930**

Terminal, wenn aktiviert, so eingerichtet ist, dass es einen Anschluss an eine Leitwegsausrüstung (RI, RS, RD, RE) und die Vermittlung an diese von einer Definition der vom Terminal erwünschten Art von Aufgaben verursacht, dass die Leitwegsausrüstung von der erwähnten Definition abhängig Information über den Verkehrsweg an das Terminal zurücksendet, den das Terminal, wenn aktiviert, dem Netz zuteilen soll, um an denjenigen Computer angeschlossen zu werden, der die Aufgabe ausführen kann, und dass die Verbindung zwischen dem Terminal under der Leitwegsausrüstung nach dem Erhalt der erwähnten Information abgebrochen wird, wonach das Terminal eine eigene Verbindung mit der erwähnten Computer herbeiführen kann.

2. Anordnung gemäss Anspruch 1, dadurch gekennzeichnet, dass das Terminal (T1—T4) beim erwähnten Aktivieren so eingerichtet ist, dass es einen automatischen Anschluss an die Leitwegsausrüstung und nach dem Erhalt der erwähnten Information ein automatisches Abbrechen der Verbindung zur Leitwegsausrüstung verursachen soll.

3. Anordnung gemäss Anspruch 1, dadurch gekennzeichnet, dass eine oder mehrere Leitwegsausrüstungen (RI, RS, RD, RE) in dem Wählsystem angebracht sind, und/oder dass eine oder mehrere Leitwegsausrüstungen in einem bzw. mehreren Computern eingerichtet sind, vorzugsweise in einem solchen Computer oder in solchen Computern, mit dem bzw. denen das einzelne Terminal meistens benutzt wird.

4. Anordnung gemäss irgendeinem der früheren Ansprüche, dadurch gekennzeichnet, dass die einzelne Leitwegsausrüstung mittels eines/einiger im Netz eingerichteten Überwachungsorgan(e) (CDP) steuerbar ist, welches/welche die Pfaddirigierungsfunktion der einzelnen Leitwegsausrüstung steuert/steuern.

5. Anordnung gemäss Anspruch 4, dadurch gekennzeichnet, dass die einzelne Leitwegsausrüstung so eingerichtet ist, dass es dem aufrufenden Terminal Information erteilen soll, wenn Verkehrsbedürfnisse vom aktivierten Terminal nicht effektuiert werden können.

6. Anordnung gemäss den Ansprüchen 4 oder 5, dadurch gekennzeichnet, dass die Leitwegsausrüstung zur Steurerung des erwähnten Überwachungsorgans zum Abbrechen einer Verbindung mit niedriger Priorität angeordnet ist.

7. Anordnung gemäss irgendeinem der früheren Ansprüche, dadurch gekennzeichnet, dass das einzelne Terminal eine Speicherungsausrüstung (RT—S, RT—D, RT—E, RT—Cl) für Leitwegsinformation umfasst oder an eine solche Speicherungsausrüstung angeschlossen ist.

8. Anordnung gemäss irgendeinem der früheren Ansprüche, dadurch gekennzeichnet, dass die einzelne Leitwegsausrüstung schaltbar so angeordnet ist, dass Umschaltung von einem schon angeschlossen Computer an einen anderen Computer automatisch erfolgt, wenn z.B. der angeschlossene Computer eine Art von Aufgaben nicht ausführen kann und der andere Computer die Aufgabe ausführen kann.

9. Anordnung gemäss irgendeinem der früheren Ansprüche, dadurch gekennzeichnet, dass das Terminal Informationen, z.B. in einer kodierten Form, an die Leitwegsausrüstung übersendet, die die Charakteristik des Terminals beschreiben, wobei die Leitwegsausrüstung bei der Verbindung des Terminals mit einem Computer auch diese Charakteristik berücksichtigt.

10. Anordnung gemäss irgendeinem der früheren Ansprüche, dadurch gekennzeichnet, dass die Leitwegsausrüstung oder der Computer Informationen in bezug auf das, was vom Terminal erfordert wird, um die verlangten Aufgaben bearbeitet zu bekommen, an das Terminal sendet.

## Revendications

1. Dispositif de communication comprenant un réseau de transmission (K), par exemple un réseau intégré de données, de téléphonie, de texte et/ou d'images, et comprenant en outre des terminaux (T1—T4) et des ordinateurs (P1—P4) connectés au réseau, chaque terminal pouvant être relié à l'ordinateur désiré qui exécute la tâche de traitement désirée introduite au moyen du terminal, caractérisé en ce que le terminal est agencé de manière à provoquer, lorsqu'il est actionné, une liaison avec un élément d'équipement d'aiguillage (RI, RS, RD, RE) et la transmission à celui-ci d'une définition du type de travail qu'on désire exécuter à partir du terminal; en ce que l'équipement d'aiguillage, selon la nature de la définition précitée, envoie en retour au terminal une information relative au cheminement de trafic à affecter dans le réseau au terminal lorsqu'il est actionné, de sorte que celui-ci puisse être connecté à un ordinateur qui est capable d'exécuter la tâche; et en ce que la connexion entre le terminal et l'équipement d'aiguillage est interrompue lorsque le terminal a reçu l'information précitée, le terminal étant alors capable d'effectuer de lui-même une liaison avec ledit ordinateur.

2. Dispositif suivant la revendication 1, caractérisé en ce que le terminal (T1—T4) est agencé de sorte que, dans le cas de l'actionnement précité, il se produit une liaison automatique avec l'équipement d'aiguillage et, après réception de l'information précitée, il se produit une interruption automatique de la connexion avec l'équipement d'aiguillage.

3. Dispositif suivant la revendication 1, caractérisé en ce qu'un ou plusieurs éléments d'équipement d'aiguillage (RI, RS, RD, RE) sont prévus dans le système sélecteur et/ou en ce qu'un ou plusieurs éléments d'équipement d'aiguillage sont prévus dans un ou plusieurs ordinateurs, de préférence dans un ordinateur ou des ordinateurs avec lesquels le terminal est principalement utilisé.

4. Dispositif suivant l'une quelconque des revendications précédentes, caractérisé en ce que chaque élément d'équipement d'aiguillage peut être commandé au moyen d'un ou plusieurs organes de pilotage (CDP) prévus dans le réseau et qui commandent la fonction de direction de cheminement de chaque élément d'équipement d'aiguillage.

5. Dispositif suivant la revendication 4, caractérisé en ce que chaque élément d'équipement d'aiguillage est agencé de manière à informer un terminal qui est appelé, chaque fois qu'une communication demandée ne peut pas être exécutée par le terminal actionné.

6. Dispositif suivant les revendications 4 ou 5, caractérisé en ce que l'équipement d'aiguillage est agencé de manière à commander les organes de pilotage précités, afin d'interrompre une connexion de faible priorité.

7. Dispositif suivant l'une quelconque des revendications précédentes, caractérisé en ce que chaque terminal comprend ou est connecté à un dispositif de mémoire (RT—S, RT—D, RT—E, RT—CI) pour l'information d'aiguillage.

8. Dispositif suivant l'une quelconque des revendications précédentes, caractérisé en ce que chaque élément d'équipement d'aiguillage est agencé de manière à pouvoir être commuté de sorte qu'une commutation automatique a lieu d'un ordinateur, déjà relié, à un autre ordinateur, par exemple lorsque l'ordinateur relié est incapable d'exécuter un type particulier de tâche et lorsque l'autre ordinateur est capable d'exécuter la tâche.

9. Dispositif suivant l'une quelconque des revendications précédentes, caractérisé en ce que le terminal pour l'équipement d'aiguillage transmet une information, par exemple sous forme codée, qui décrit les caractéristiques du terminal, et dans ce cas l'équipement d'aiguillage tient également compte de ces caractéristiques lors de la liaison du terminal à un ordinateur.

10. Dispositif suivant l'une quelconque des revendications précédentes, caractérisé en ce que l'équipement d'aiguillage ou l'ordinateur pour le terminal transmettent une information relative à ce qui est demandé au terminal afin d'effectuer le traitement des tâches demandées.

7

Fig.1

Fig. 2